# EUROPEAN PATENT SPECIFICATION

(11) **EP 0 504 994 B1**
(45) Date of publication and mention of the grant of the patent: **17.07.1996**
(21) Application number: 92200722.4
(22) Date of filing: 13.03.1992
(51) Int. Cl.: H02K 1/22, H02K 5/12, F04D 13/06, H02K 5/132, H02K 17/16

(54) **Rotor of a canned motor for a canned motor pump**
Rotor eines Spaltmotors für eine Spaltrohrmotorpumpe
Moteur électrique à rotor noyé pour une pompe

(30) Priority: 20.03.1991 KR 371291 U; 21.06.1991 KR 924891 U
(43) Date of publication of application: 23.09.1992
(73) Proprietor: GOLD STAR CO. LTD, Seoul (KR)
(72) Inventor: Baek, Woo Sung, 2-ga, Boopyung-Dong, Joung-ku, Busan (KR)
(74) Representative: Corradini, Corrado

(56) References cited:
- DE-C- 1 089 468
- US-A- 2 758 226
- PATENT ABSTRACTS OF JAPAN vol. 4, no. 104 (E-19) (586) 25 June 1980 & JP-A-55 063 542 (MITSUBISHI DENKI K.K.) 13 May 1980
- PATENT ABSTRACTS OF JAPAN vol. 8, no. 39 (E-228) (1476) 21 February 1984 & JP-A-58 198 135 (HITACHI SEISAKUSHO K.K.) 18 November 1983

## Description

This invention relates to a rotor of a canned motor for a canned motor pump, which performs rotation through electromagnetic interaction with a stator (as shown for example in the US publication 2758226).

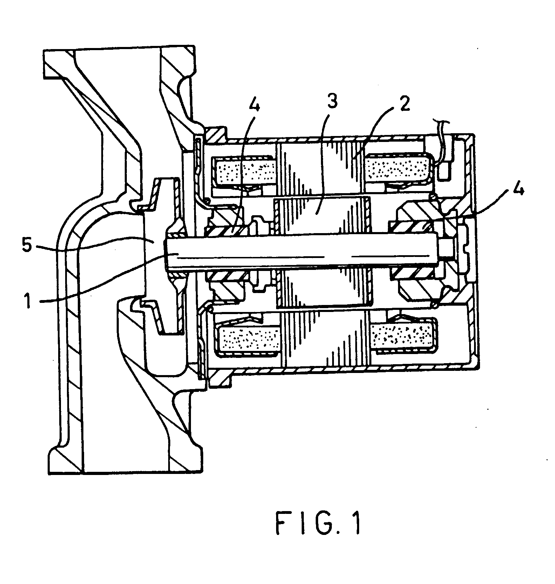

A canned motor pump having a canned motor mounted therein is generally of the type shown in fig. 1 of the accompanying drawings, in which the motor disposed at one side of the pump comprises a rotor 3 including a core assembly having a plurality of stacked cores, and a rotary shaft 1 for rotating an impeller 5, press-fitted into the central portion of the core assembly; and a stator 2 disposed peripherically of the rotor 3 in radially facing relation to the rotor, whereby the rotor 3 performs high speed rotation by electromagnetic interaction with the stator, so that the impeller 5 secured to one end of the rotary shaft 1 for rotation therewith is rotated, thereby pumping fluid.

At this time, lubrication of sliding contact surfaces between the rotary shaft 1 rotating at high speed and bearing 4 guiding and supporting the opposite end portions of the shaft is not provided by supplying separate lubrication oil, but circulating the pumping fluid into the interior of the motor portion. Therefore, the rotor of the motor for the canned motor pump must be arranged to meet the requirements of airtightness preventing the fluid from permeating into the interior and anticorrosion preventing corrosion thereof.

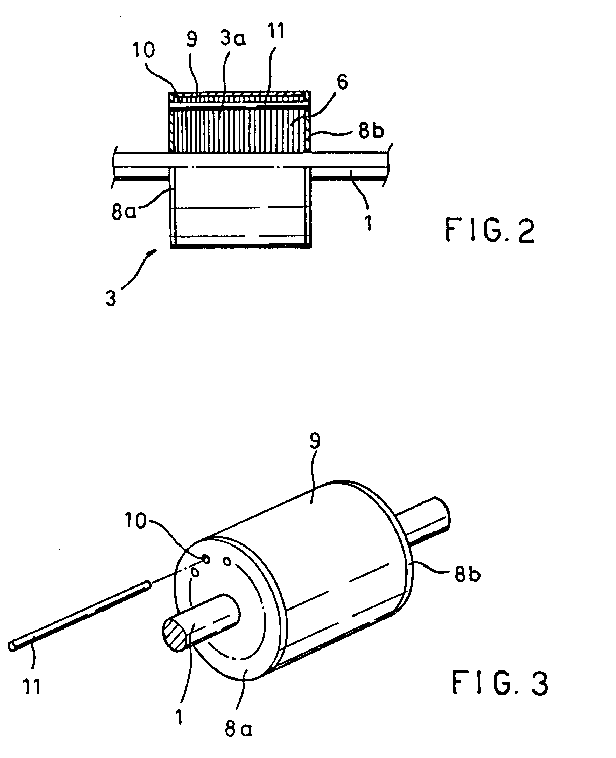

To satisfy requirements as set forth above, the prior rotor has the construction as shown in FIGS. 2 and 3 of the accompanying drawings, which comprises the core assembly 3a consisting of stacked cores 6 each having a central aperture and a plurality of circumferentially spaced slots 10 formed therein, opposite end plates 8a and 8b of copper attached to the opposite sides of the core assembly and each having a central aperture and slots corresponding to the central aperture and slots of the core, rotor bars 11 of copper inserted into the slots 10 and secured to the end plates 8a and 8b by welding their ends engaged with the plates when inserted into the slots, a rotor can 9 of stainless material disposed on the outer peripheral surface of the core assembly to enclose it, and the rotary shaft 1 press-fitted into the central aperture of the combination of the core assembly and the end rings. Accordingly, permeation of the fluid into the core assembly 3a comprising the cores 6 is prevented by the airtight casing consisting of the end plates 8a and 8b and the rotor can 9, which entirely surround the core assembly.

In this prior rotor, the end plates and rotor bars, which serve as rotor conductors. are made of electric copper, resulting in higher manufacturing cost of the product, and the processes of inserting the rotor bars into the slots of the core assembly and then welding the bars to tne end plates lead to complexity of the manufacturing operation, thereby lowering productivity. In addition, since the rotor can enclosing the core assembly to prevent permeation of water from the outside is made of separate finished stainless material, the manufacturing cost is increased. Furthermore, the thickness of the rotor can itself leads to the increase of the range of an air gap between the rotor and the stator over at least 0,2 mm, thereby lowering efficiency of the motor. Moreover, although the rotor can nas been accurately finished and mounted around the core assembly, the airtightness between the rotor can and the core assembly may not be properly maintained with use of the motor for a long time, resulting in permeation of the core assembly.

With the foregoing drawbacks of the prior art rotor in view, it is an object of the present invention to provide an improved rotor of a canned motor, which is relatively simple and inexpensive to manufacture and has enhanced airtightness and anticorrosion properties.

To achieve the above object, there is provided a rotor of a canned motor for a canned motor pump comprising a core assembly consisting of a plurality of stacked cores each having a plurality of slots and a central aperture formed therein; a conductor portion consisting of a plurality of aluminium bars inserted into respective slots of said core assembly, and opposite end aluminium rings disposed on the opposite sides of said core assembly; a rotary shaft press-fitted into said central aperture; and an airtight casing enclosing said core assembly and conductor portion, characterized by said casing comprising a coating of an electroless nickel plating film formed on the outer surfaces of said core assembly and said conductor portion to prevent fluid from permeating into them.

The present invention is described hereinafter with reference to the accompanying Figures, which illustrate preferred but not exclusive embodiments thereof.
FIG 1 is a cross -sectional view of a canned motor pump having a canned motor mounted therein, according to the prior art;
FIG. 2 is an elevation view, in partial section, of a rotor of a canned motor for a canned motor pump according to the prior art;
FIG. 3 is a perspective view of the rotor of the prior art canned motor;
FIG. 4 is an elevation view, in partial section, of a rotor of a canned motor for a canned motor pump according to one embodiment of the present invention;
FIG. 5 is a perspective view of the conductor portion which is one of the essential parts of the present invention;
FIG. 6 is an enlarged cross-sectional view of a portion of a double coating film according to another embodiment of the present invention: and

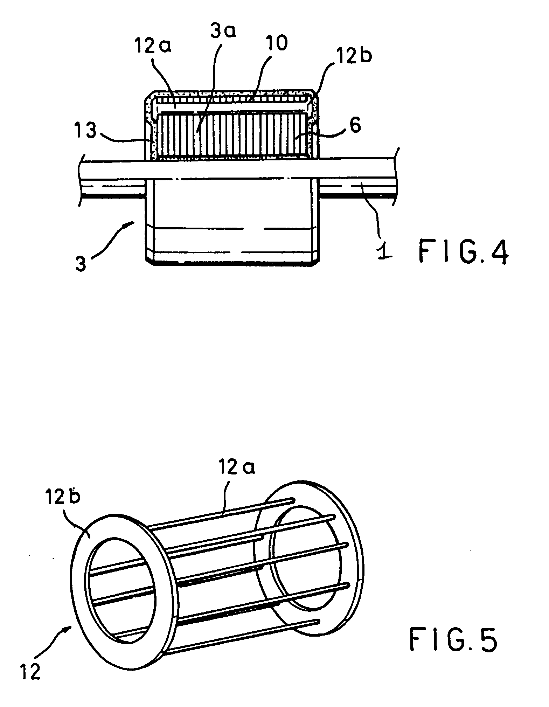

FIG 4 illustrates an elevation view, in partial view, of a rotor of a canned motor for a canned motor pump according to one embodiment of the present invention. The construction of the rotor is identical with that of the prior art rotor in that it comprises a core assembly 3a composed of a plurality of stacked cores 6 each having a plurality of slots 10 formed therein, a plurality of rotor bars 12a inserted into respective slots 10 of the core assembly 3a, and a rotary shaft 1 press-fitted into the central portion of the core assembly. However, the rotor according to the present invention comprises a conductor portion 12 integrally constituted by the rotor bars 12a to be inserted into the slots 10 of the core assembly 3a, and opposite end rings 12b serving to connect the rotor bars 12a at the opposite side surfaces of the core assembly.

The conductor portion 12 thus formed is of the type as shown in Fig. 5 illustrating a perspective view thereof, and serves not only to join the cores 6 together, but also as a conductor of the rotor. In this case the conductor portion 12 is preferably formed by diecasting lowpriced aluminium material as a single process.

In addition, according to the present invention, there is provided a coating film 13 covering the entire outer surface of a rotor assembly including the core assembly 3a and the conductor portion 12.

In the embodiment shown in Fig. 4 the coating film 13 is formed to cover not only the entire outer surface of the rotor assembly, but also the inner surface of the central aperture of the rotor assembly, into whicn the rotary shaft 1 is press-fitted, by performing the coating treatment of the rotor assembly itself prior to a process of press-fitting the shaft 1 into the rotor assembly. However, the coating film may be formed in a condition in which the shaft has been press-fitted, by performing the process of press-fitting the shaft 1 into the rotor assembly prior to the coating treatment of the rotor assembly itself. In this instance, when the coating treatment of the rotor assembly with the rotary shaft Press-fitted is carried out, the coating treatment may be executed to coat either only the rotor assembly portion, or, if necessary, the entire rotor comprising the rotor assembly and the rotary shaft press-fitted into the assembly. The coating film 13 prefereably comprises a plating film of strong corrosion resistance formed, for example, by electroless plating treatment. More preferably, the plating film may be formed bv electroless nickel plating.

Moreover, the plating film may be formed as a double plating film including a first plating film and a second plating film applied over the first plating film.

Such a double plating film provides further enhanced durability of the rotor in comparison with the single plating film.

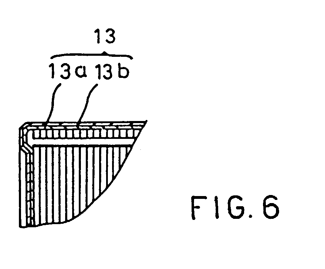

Alternatively, the coating film 13 may be formed, as in anotner embodiment shown in Fig. 6, as a double film comprising an underlying plating film 13a having strong corrosion resistance and a painting film 13b applied over the platinc film 13a, so that airtightness, durability and anticorrosion of the rotor may be further enhanced.

Since the conductor portion of the rotor according to the present invention is integrally constituted, as described above, by the rotor bars and the end rings, both of which are diecast from the low-princed aluminium material, the manufacturing cost is reduced and the productivity is considerably enhanced.

In addition, since there is free from a clearance opening to the cores, owing to the coating film according to the present invention, for example, the single plating film, the double plating film, the double film comprising the plating film and the painting film, and especially, the plating film formed by the electroless nickel plating have superior anticorrosion over stainless material of the rotor can of the prior rotor, the rotor assembly may be perfectly protected from permeation of water and corrosion by the water.

Moreover, since the coating films according to various embodiments as set forth above have the minute thickness of 5 ∼ 30 µm, an air gap between the rotor and the stator may considerably reduced as compared with the gap of 0,2 mm in the prior art rotor using the stainless can, thereby resulting in enhanced efficiency of the motor.

In addition, the plating process permits the mass-production of the rotor, resulting in reducing the manufacturing cost and greatly enhancing the productivity.

## Claims

1. A rotor of a canned motor for a canned motor pump, of the type comprising a core assembly (3a) composed of a plurality of stacked cores (6), each having a plurality of slots and a central aperture formed therein;
a conductor portion consisting of a plurality of aluminium bars (12a) into respective slots of said core assembly, and opposite end aluminium rings (12b) disposed on the opposite sides of said core assembly;
a rotary shaft (1) press-fitted into said central aperture ; and
an airtight casing (8a, 8b, 9) enclosing said core assembly and conductor portion,
characterized by
said casing comprising a coating of an electroless nickel plating film (13) formed on the outer surface of said core assembly and said conductor portion to prevent fluid from permeating into them.

2. A rotor of a canned motor for a canned motor pump as claimed in claim 1, characterized in that said conductor portion (12) is formed by aluminium diecasting.

3. A rotor of a canned motor for a canned motor pump as claimed in claim 1, characterized in that said CASING comprises a double film composed of a first placing film (13a) and a second plating film (13b).

4. A rotor of a canned motor for a canned motor pump as claimed in claim 1, characterized in that said CASING comprises a painting film having strong corrosion resistance.

5. A rotor of a canned motor for a canned motor pump as claimed in claim 1, characterized in that said CASING comprises a double film composed of a plating film (13) and a painting film.

6. A rotor of a motor for a canned motor pump as claimed in any of the preceding claims, characterized in that the thickness of said coating film (13) is in the range of 5∼30 µm.

## Patentansprüche

1. Ein Läufer eines versiegelten Motors für eine Pumpe eines versiegelten Motors, des Typs mit einem intemen Kem (3a), der besteht aus: mehreren aufeinander gestapelten Kemen (6), von denen jeder mit Schlitzen und intem mit einer zentralen Öffnung versehen ist,
einem Leiterteil, der aus einer Gruppe von Aluminiumstangen (12a) in den Schlitzen des vorab genannten zentralen Kems und aus gegenüberliegenden Aluminiumringen (12b), die auf der entgegengesetzten Seite des zentralen Kems angebracht sind, besteht;
einer Drehwelle (1), die in die obengenannte zentrale Öffnung durch Druck eingesetzt ist; und
einer dichten Aufnahme (8a, 8b, 9), die den vorab genannten zentralen Kem und den Leiterteil umschließt, gekennzeichnet dadurch, daß
diese Aufnahme mit einer Nickelplattierung im Reduktions-Schlämmverfahren (13) ausgekleidet ist, die an der äußeren Seite des obengenannten zentralen Kems und des obigen Leiterteils gebildet wurde, um zu vermeiden, daß die Flüssigkeiten mit diesen in Berührung kommen.

2. Ein Läufer eines versiegelten Motors für eine Pumpe eines versiegelten Motors wie unter Patentanspruch Nr. 1 beschrieben, gekennzeichnet dadurch, daß der obengenannte Leiterteil (12) aus druckgegossenem Aluminium besteht.

3. Ein Läufer eines versiegelten Motors für eine Pumpe eines versiegelten Motors wie unter Patentanspruch Nr. 1 beschrieben, gekennzeichnet dadurch, daß die vorab genannte Aufnahme mit einer doppelten Schicht versehen ist, die aus einer ersten hauchdünnen Plattierungsschicht (13a) und aus einer zweiten ebenso dünnen Plattierungsschicht (13b) besteht.

4. Ein Läufer eines versiegelten Motors für eine Pumpe eines versiegelten Motors wie unter Patentanspruch Nr. 1 beschrieben, gekennzeichnet dadurch, daß die obige Aufnahme mit einer äußerst korrosionsfesten Lackschicht versehen ist.

5. Ein Läufer eines versiegelten Motors für eine Pumpe eines versiegelten Motors wie unter Patentanspruch Nr. 1 beschrieben, gekennzeichnet dadurch, daß die obige Aufnahme eine doppelte Schicht aufweist, die aus einer ersten hauchdünnen Plattierungsschicht (13) und aus einer Lackschicht besteht.

6. Ein Läufer eines versiegelten Motors für eine Pumpe eines versiegelten Motors wie unter den vorherigen Patentansprüchen beschrieben, gekennzeichnet dadurch, daß die Stärke der obigen Verkleidung zwischen 5 und 30 um liegt.

## Revendications

1. Un rotor d'un moteur scellé pour une pompe d'un moteur scellé, du type comprenant un noyau inteme (3a) composé d'un ensemble de noyaux empilés (6), chacun desquels présentant un ensemble de fissures et une ouverture centrale interne;
une partie d'un conducteur qui se compose d'un ensemble de barres en aluminium (12a) dans les fissures correspondantes du noyau central cité ci-dessus et d'anneaux en aluminium opposés (12b), disposés du côté opposé au noyau central cité ci-dessus;
un arbre rotatif (1) introduit par pression dans l'ouverture centrale susnommée; et
une niche étanche (8a, 8b, 9) qui contient le noyau central cité ci-dessus et la partie du conducteur, caractérisée par le fait que
cette niche comprend un revêtement formé par une couche de plaquage en nickel déposé par réduction (13), formé sur la partie extérieure du noyau central cité ci-dessus et de la partie du conducteur susnommée, et ce dans le but d'éviter leur entrée en contact avec des fluides.

2. un rotor d'un moteur scellé pour une pompe d'un moteur scellé, comme affirmé dans la revendication 1, caractérisé par le fait que la susnommée partie du conducteur (12) se compose d'aluminium moulé sous pression.

3. un rotor d'un moteur scellé pour une pompe d'un moteur scellé, comme affirmé dans la revendication 1, caractérisé par le fait que la niche susnommée présente une double couche se composant d'une première pellicule de plaquage (13a) et d'une deuxième pellicule de plaquage (13b).

4. un rotor d'un moteur scellé pour une pompe d'un moteur scellé, comme affirmé dans la revendication 1, caractérisé par le fait que la niche susnommée présente une couche de vemis possédant une grande résistance à la corrosion.

5. un rotor d'un moteur scellé pour une pompe d'un moteur scellé, comme affirmé dans la revendication 1, caractérisé par le fait que la niche susnommée présente une double couche composée d'une première pellicule de plaquage (13) et d'une couche de vemis.

6. un rotor d'un moteur scellé pour une pompe d'un moteur scellé, comme affirmé dans dans une quelconque des revendications précédentes, caractérisée par le fait que l'épaisseur du revêtement cité ci-dessus (13) est compris entre 5 et 30 µm.
